# EUROPÄISCHE PATENTSCHRIFT

(11) **EP 3 921 752 B1**
(45) Veröffentlichungstag und Bekanntmachung des Hinweises auf die Patenterteilung: **11.01.2023**
(21) Anmeldenummer: 20702635.2
(22) Anmeldetag: 30.01.2020
(51) Int. Cl.: G06F 21/62, H04W 12/02, H04W 4/029

(54) **ÜBERWACHUNG UND KORREKTUR DER VERSCHLEIERUNG FAHRZEUGBEZOGENER DATEN**
MONITORING AND ADJUSTING THE OBFUSCATION OF VEHICLE-RELATED DATA
SURVEILLANCE ET RÉGLAGE DE L'OBSCURCISSEMENT DES DONNÉES LIÉES AU VÉHICULE

(30) Priorität: 06.02.2019 DE 102019201530
(43) Veröffentlichungstag der Anmeldung: 15.12.2021
(73) Patentinhaber: VOLKSWAGEN AKTIENGESELLSCHAFT, 38440 Wolfsburg (DE)
(72) Erfinder: MAX, Stephan, 38518 Gifhorn (DE); SEIDEL, Christian Alexander, 38556 Bokensdorf (DE)
(86) Internationale Anmeldenummer: PCT/EP2020/052211
(87) Internationale Veröffentlichungsnummer: WO 2020/160987

(56) Entgegenhaltungen:
- DE-A1-102016 225 287
- ASUQUO PHILIP ET AL: "Security and Privacy in Location-Based Services for Vehicular and Mobile Communications: An Overview, Challenges, and Countermeasures", IEEE INTERNET OF THINGS JOURNAL, IEEE, USA, Bd. 5, Nr. 6, 1. Dezember 2018 (2018-12-01), Seiten 4778-4802, XP011705655, DOI: 10.1109/JIOT.2018.2820039 [gefunden am 2019-01-15]
- GEDIK B ET AL: "Protecting Location Privacy with Personalized k-Anonymity: Architecture and Algorithms", IEEE TRANSACTIONS ON MOBILE COMPUTING, IEEE SERVICE CENTER, LOS ALAMITOS, CA, US, Bd. 7, Nr. 1, 1. Januar 2008 (2008-01-01), Seiten 1-18, XP011335200, ISSN: 1536-1233, DOI: 10.1109/TMC.2007.1062

## Beschreibung

Die Erfindung betrifft ein Verfahren und eine Vorrichtung zur Überwachung und Korrektur der Verschleierung der von einem Fahrzeug erzeugten Daten, insbesondere Umfelddaten, die an einen Backend-Rechner, im Folgenden kurz Backend bezeichnet, übertragen werden, so dass aus den verschleierten Daten keinerlei Rückschlüsse auf das Fahrzeug und/oder dessen Insassen gezogen werden können.

In aktuellen Anwendungen werden dem Fahrzeug für unterschiedliche Systeme von der Sensorik des Fahrzeugs erzeugte Daten entnommen und dem Backend zugeführt. So können beispielsweise orts-und zeitbezogene Daten von Fahrzeugsensoren in Anwendungen wie Wetterprognosen, Parkplatzbelegungen oder auch Verkehrsflussdaten eingesetzt werden. Im Backend werden dann diese Daten des Fahrzeugs mit den Daten anderer Fahrzeuge auf einer Karte kombiniert und das Ergebnis den nutzenden Funktionen zurückgeführt.

Aus Gründen des Datenschutzes werden die gesammelten Datensätze jedoch stets in anonymer Form an den jeweiligen Funktionsnutzer abgegeben. Hierzu wird folgender Ablauf verwendet:
- das Fahrzeug schickt die Daten personenbezogen zum Backend,
- das Backend überprüft die Daten und führt eine Anonymisierung durch, und
- die nutzenden Funktionen erhalten die anonymen Daten für die Weiterverarbeitung.

Die Anonymisierung selbst wird auf der Basis diverser Annahmen durchgeführt, wobei für den Bereich der Datenerhebung ein Verkehrsfluss und eine Marktdurchdringung abgeschätzt wird. Bislang gibt es jedoch keine Möglichkeit diese Schätzung im Serienbetrieb zu überprüfen. Da jedoch der Datenschutz unbedingt eingehalten werden muss, ist daher die Schätzung mit einem Sicherheitsaufschlag zu versehen, wodurch unter Umständen die Qualität der Datensätze herabgesetzt wird und daher die Aussagefähigkeit der die anonymisierten Datensätze verwendende Funktion abnimmt.

Die Druckschrift US 2018/0131740 A1 beschreibt ein System und ein Verfahren zum Anonymisieren von übertragenen Datensätzen umfassend:
- Verarbeiten einer oder mehrerer Datensätze in eine oder mehrere anonyme Vektordarstellungen der Datensätze,
- Laden eines generalisierten Vektors, der einen gewünschten Grad der Anonymisierung einschließt,
- Vergleichen der anonymisierten Vektordarstellungen der Datensätze mit dem generalisierten Vektor,
- Bestimmen, ob aufgrund des Vergleichs die anonymisierten Vektordarstellungen der Datensätze ausreichend anonym sind,
- Identifizieren einer zeitlichen Periode zum Senden der ausreichend anonymisierten Datensätze, und
- Erhöhen oder Erniedrigen einer Quantität an Computerressourcen, die festlegen ob die Vektordarstellungen der Datensätze basierend auf der verbleibenden Restzeit in der zeitlichen Periode ausreichend anonymisiert sind.

Mit anderen Worten, die genannte Druckschrift US 2018/0131740 A1 beschreibt einen Algorithmus, welcher in einer Datenbank prüft ob gewisse Datenklassen anonymisierbar sind. Hierbei werden beispielsweise Personen, welche innerhalb der Region einer Postleitzahl leben, ermittelt. Ist die Anzahl der Personen innerhalb der Postleitzahlbereichs gemäß den Anforderungen der Anonymisierung groß genug, werden diese Daten als anonymisierbar gekennzeichnet und für weiteren Verarbeitungsschritte freigegeben. Ist die Freigabe nicht erfolgt, so werden weitere Daten gesammelt und die Prüfung wird erneut durchgeführt bis eine Freigabe erreicht wird.

Die Druckschrift DE 10 2016 225287 A1 offenbart, dass Zeit- und Ortsangaben in von Fahrzeugen empfangenen Telemetriedaten unkenntlich gemacht werden, wobei der Grad der Unkenntlichmachung auf der geschätzten Verkehrsdichte um ein datenerfassendes Fahrzeug basiert, so dass eine Gruppenanonymität erreicht wird und es nicht möglich ist, das einzelne Fahrzeug zurückzuverfolgen.

Der Erfindung liegt daher die Aufgabe zugrunde, ein Verfahren und eine Vorrichtung zum Überwachen eines Anonymisierungsfilters für fahrzeugbezogen Daten zu schaffen.

Diese Aufgabe wird durch ein Verfahren mit den Merkmalen des Anspruchs 1 sowie durch eine entsprechende Vorrichtung mit den Merkmalen des Anspruchs 8 gelöst. Bevorzugte Ausgestaltungen der Erfindung sind Gegenstand der Unteransprüche.

Das erfindungsgemäße Verfahren zur Überwachung und Korrektur der Verschleierung der an einen Backend-Rechner übertragenen fahrzeugbezogenen Daten eines Fahrzeugs durch einen Anonymisierungsfilter aufweisend:
- Entfernen personenbezogener Daten aus den übertragenen fahrzeugbezogenen Daten,
- Zusammenfassen der fahrzeugbezogenen Daten nach der Entfernung des Personenbezugs zu einem fahrzeugbezogenen Datensatz ohne Personenbezug,
- Durchführen einer zeitlichen und räumlichen Verschleierung des fahrzeugbezogenen Datensatzes ohne Personenbezug basierend auf einer geschätzten Schwarmgröße von datensammelnden Fahrzeugen zur Erzeugung eines anonymen Datensatzes, und
- Bereitstellen des anonymen Datensatzes einschließlich des Grades der Verschleierung an einen Datennutzer, wobei
- eine tatsächliche Schwarmgröße für eine räumliche Region anhand der bereitgestellten anonymen Datensätze ermittelt wird,
- die ermittelte tatsächliche Schwarmgröße mit der zur Verschleierung der anonymen Datensätze verwendeten geschätzten Schwarmgröße verglichen wird, und
das Vergleichsergebnisses zur Korrektur der Verschleierung der räumlichen Region verwendet wird.

Für die Kenngrößen der Verschleierung erfolgt daher eine punktuelle Prüfung der Funktionalität des Anonymisierungsfilters. Das Vergleichsergebnis wird dann als ortsbezogener Korrekturwert dem Anonymisierungsfilter zurückgeführt und korrigiert somit mögliche Abweichungen der geschätzten Schwarmgröße zur gemessenen Realität, wobei die geschätzte Schwarmgröße beispielsweise anhand der Verkehrsdichte im Umfeld des datensammelnden Fahrzeugs abgeschätzt werden kann.

Vorzugsweise erfolgt die Korrektur der Verschleierung sowohl in zeitlicher als auch in räumlicher Hinsicht, wodurch die Verschleierung in beider Hinsicht an die Realität angepasst wird. Mit anderen Worten, die Verschleierung erfolgt durch ein Verrauschen der Mess-Position und des Messzeitpunktes.

Weiter bevorzugt werden zur Ermittlung der tatsächlichen Schwarmgröße durchgeführt:
- Zufälliges Auswählen eines initialen anonymen Datensatzes,
- Sammlung weiterer, dem initialen Datensatz nachfolgender anonymer Datensätze für ein vorgegebenes Zeitintervall, wobei die nachfolgenden Datensätze die Region des initialen Datensatz betreffen,
- Bestimmen der tatsächlichen Schwarmgröße durch Bestimmen der Anzahl der anonymen Datensätze innerhalb des vorgegebenen Zeitintervalls für die durch verschleierte Position des initialen Datensatzes vorgegebene räumliche Region,
- Vergleich der tatsächlichen Schwarmgröße mit der durch den Grad der Verschleierung des initialen Datensatzes festgelegten geschätzten Schwarmgröße, und
- Korrektur der Verschleierung des Anonymisierungsfilters für die vorgegebene räumliche Region anhand des Vergleichsergebnisses.

Auf diese Weise wird für die durch die Position des initialen Datensatz definierte räumliche Region die tatsächliche Schwarmgröße anhand der dem initialen Datensatz nachfolgenden anonymen Datensätze ermittelt, so dass die tatsächliche Schwarmgröße dann zur Korrektur der geschätzten Schwarmgröße für diese Region verwendet werden kann. Als vorgegebenes Zeitintervall zur Bestimmung der tatsächlichen Schwarmgröße wird bevorzugt die durch den initialen Datensatz definierte Zeitoffset der zeitlichen Verschleierung verwendet.

Weiter bevorzugt werden die Korrekturgrößen für unterschiedliche räumliche Regionen in einer Korrekturkarte für die unterschiedlichen räumlichen Regionen abgelegt und eine Korrektur der geschätzten Schwarmgröße anhand der Korrekturkarte erfolgt für die jeweilige Region.

Weiter bevorzugt erfolgt die Korrektur der Verschleierung der räumlichen Region stetig differenzierbar. Auf diese Weise wird sichergestellt, dass die Korrektur anhand der ermittelten tatsächlichen Schwarmgröße langsam erfolgt, so dass die Korrekturkarte nur langsam verändert wird, um Oszillationen im Verschleierungsverhalten zu vermeiden.

Weiter bevorzugt kann der Grad der Verschleierung der anonymisierten Datensätze weiter dahingehend überprüft werden, ob ein Angreifer aus einem anonymen Datensatz das datensammelnde Fahrzeug wieder identifizieren kann. Dazu kann vorzugsweise ein Mean-Time-to-Confusion-Verfahren verwendet werden.

Die erfindungsgemäße Vorrichtung zur Überwachung und Korrektur der Verschleierung der an einen Backend-Rechner übertragenen fahrzeugbezogenen Daten eines Fahrzeugs, wobei die Vorrichtung zur Durchführung des im Vorangegangenen erläuterten Verfahrens eingerichtet und ausgelegt ist, umfasst:
- einen Anonymisierungsfilter zum Anonymisieren der fahrzeugbezogenen Daten mit
- einer Einrichtung zum Entfernen personenbezogener Daten,
- einer Einrichtung zum Berechnen der Verkehrsdichte,
- einer Einrichtung zur zeitlichen Verschleierung der Daten,
- einer Einrichtung zur räumlichen Verschleierung der Daten, und
- einer Einrichtung zur Ausgabe der anonymen Daten mit Angabe des Verschleierungsgrades,
sowie
- einen Beobachter mit
   - einer Einrichtung zur zufälligen Auswahl eines anonymen Datensatzes,
   - einer Einrichtung zur Sammlung weiterer anonymer Datensätze gleicher Position und Ermittlung der tatsächlichen Schwarmgröße, und
   - einer Einrichtung zum Vergleich der tatsächlichen Schwarmgröße mit der geschätzten Schwarmgröße zur Bestimmung eines Korrekturparameters für den Anonymisierungsfilter.

Wie bereits ausgeführt, erfolgt die Verschleierung durch ein Verrauschen der gemessenen Position und des gemessenen Zeitpunktes. Die für den Beobachter vergleichbaren Datensätze, die dann die Schwarmgröße ergeben, werden innerhalb des Zeit- und Raumintervalls der Verschleierung ermittelt.

Vorzugsweise umfasst der Anonymisierungsfilter einen Regler und eine Korrekturkarte, wodurch die auf die geschätzte Schwarmgröße bezogene zeitliche und räumliche Verschleierung direkt für die aktuelle Region korrigiert wird.

Weiter bevorzugt weist der Anonymisierungsfilter eine Einrichtung zum Erstellen und Begrenzen eines eingehenden Datensatzes auf. Auf diese Weise können Daten entfernt werden, die einen Rückschluss auf das Fahrzeug ermöglichen würden. So werden beispielsweise zumindest die Bereiche um den Startpunkt und den Endpunkt der Fahrt des datensammelnden Fahrzeugs entfernt, um die Anonymität des Fahrzeugs zu gewährleisten.

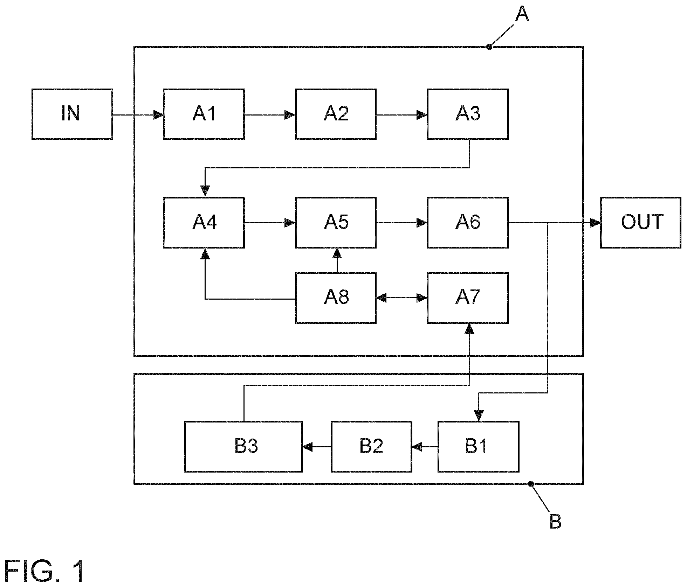

Eine bevorzugte Ausgestaltung der Erfindung wird nachfolgend anhand der Zeichnung näher erläutert. Dabei zeigt
- Fig. 1: einen Anonymisierungsfilter mit angeschlossenem Beobachter in schematischer Darstellung.

Dem in Fig. 1 dargestellten Anonymisierungsfilter A, der in einem datensammelnden Backend angeordnet ist, werden über eine Eingabeeinheit IN fahrzeugbezogene Daten mit Personenbezug zugeführt, wobei diese fahrzeugbezogenen Daten anwendungsspezifische Parameter umfassen. Der Personenbezug der Daten umfasst beispielsweise die Fahrzeugidentifizierungsnummer des datensammelnden und datenübertragenden Fahrzeugs, sowie optional weitere Identifikatoren, die Rückschlüsse auf das Fahrzeug oder die Personen im Fahrzeug zulassen.

Mit anderen Worten, der Anonymisierungsfilter A anonymisiert die empfangenen Daten eines fahrenden Fahrzeugs, welches während der Fahrt insbesondere Daten über das Umfeld des Fahrzeugs entlang seines Fahrwegs mittels seiner Umfeldsensorik aufsammelt und an einen Backend drahtlos übermittelt. Diese fahrzeuggezogenen Daten des betreffenden Fahrzeugs umfassen beispielsweise Informationen über Wetterbedingungen, aktuelle Verkehrsbedingungen wie Verkehrsfluss, Verkehrsbehinderungen wie Staus, Baustellen, Unfälle, etc. und sonstige Informationen, die von den Sensoren der diversen Assistenzsysteme ermittelt werden. Ferner wird die fortlaufende Position des Fahrzeugs einschließlich eines Zeitstempels, gegebenenfalls die Geschwindigkeit des datensammelnden Fahrzeugs, sowie Identifikatoren zur Identifikation des datensammelnden Fahrzeugs übermittelt. Die Aufgabe des Anonymisierungsfilters A besteht nun darin, den Personenbezug aus den Daten zu entfernen sowie die Daten so zu verschleiern, dass kein Rückschluss auf das datensammelnde Fahrzeug möglich ist, so dass die Daten zur weiteren Auswertung einem Dritten überlassen werden können.

Im Abschnitt A1 des Anonymisierungsfilters A werden neben den fahrzeugbezogenen Daten die oben genannten personenbezogenen Daten, also die Fahrzeugidentifizierungsnummer des datensammelnden und datenübertragenden Fahrzeugs, sowie weitere Identifikatoren, die Rückschlüsse auf das Fahrzeug oder die Personen im Fahrzeug zulassen, aus dem aus der Eingabeeinheit IN ankommenden Datenstrom des Fahrzeugs entfernt.

Im nachfolgenden Abschnitt A2 werden die ankommenden Daten zu einem Datensatz zusammengeführt, wobei ein Zuschneiden des Datensatzes durch das Setzen einer Anfangs- und Endemarkierung erfolgt. Dies bedeutet, dass die Daten beispielsweise um einen vorgegebenen Bereich um den Anfangspunkt und den Endpunkt der Fahrt des Fahrzeugs aus dem Datenstrom entfernt werden, wobei der vorgegebene Bereich durch einen vorgegebenen Abstand vom Anfangspunkt sowie Endpunkt der Fahrt des datensammelnden Fahrzeugs definiert ist.

Anschließend erfolgt im Abschnitt A3 eine Berechnung der Verkehrsdichte. Darunter ist die Ermittlung zu verstehen, wie viele Fahrzeuge sich im Umfeld des datensammelnden Fahrzeugs befinden. Dies kann beispielsweise durch eine Auswertung der Abstände des datensammelnden Fahrzeugs zu vorausfahrenden und nachfolgenden Fahrzeugen unter Berücksichtigung der Fahrzeuggeschwindigkeit erfolgen, woraus die Verkehrsdichte im Umfeld des datensammelnden Fahrzeugs ermittelt werden kann. Anhand der ermittelten Verkehrsdichte erfolgt als Funktion der Position des datensammelnden Fahrzeugs eine Schätzung wie viele mit dem Backend kommunizierende Fahrzeuge sich in der aktuellen Region befinden, in der die Datensammlung erfolgt. Hat der Abschnitt A3 beispielsweise anhand der Abstandsmessungen ermittelt, dass sich in einem vorgegebenen Umfeld 20 Fahrzeuge befinden, so kann beispielsweise anhand der Zulassungsstatistik für die aktuelle Region ermittelt werden, dass sich dann wahrscheinlich unter den 20 Fahrzeugen fünf Fahrzeuge einer die Datensammlung durchführenden Marke im vorgegebenen Umfeld befinden. Von diesen fünf Fahrzeugen kann dann anhand der Verbreitung der fahrzeugseitigen Kommunikationseinrichtungen angenommen werden, dass im Mittel drei Fahrzeuge mit dem Backend kommunizieren.

Im Abschnitt A4 erfolgt eine erste Anonymisierung, indem die Daten des in Abschnitt A2 erzeugten Datensatzes in zeitlicher Hinsicht verschleiert werden, wobei die Zeitstempel der Daten bewusst durch eine Verschleierung verfälscht werden. Diese zeitliche Verschleierung kann beispielsweise linearverteilt mit einem vorgegebenen Zeitoffset von beispielsweise 0 bis 30 Minuten erfolgen, wobei der Offset gegebenenfalls eine Funktion der geschätzten Verkehrsdichte ist. Andere zeitliche Verteilungsfunktionen zur zeitlichen Verschleierung sind ebenfalls anwendbar.

Im nachfolgenden Abschnitt A5 erfolgt eine räumliche Verschleierung der empfangenen Daten, indem die tatsächliche räumliche Position der Daten verändert wird. Dies kann beispielsweise durch Anwendung eines Positionsrauschen einer vorgegebenen Distanz, beispielsweise von +/-1 km, erfolgen. Dabei hat die räumliche Verschleierung zusammen mit der geschilderten zeitlichen Verschleierung das Ziel die Daten des datensammelnden Fahrzeugs so aussehen zu lassen, als ob diese von einem Schwarm einer vorgegebenen Anzahl von Fahrzeugen erzeugt worden seien. So kann beispielsweise vorgegeben sein, dass die Größe des Schwarms, der in der betrachteten Region mit dem Backend kommuniziert, eine Anzahl von zehn Fahrzeugen umfasst.

Im Abschnitt A6 des Anonymisierungsfilters A werden die zeitlich und räumlich verschleierten Daten des Datensatzes des datensammelnden Fahrzeugs mit der Angabe des Grades der Verschleierung gemäß den Modelleinstellungen zusammengeführt und der Datensatz über den Ausgang OUT einem Nutzer zur Verfügung gestellt, der die Datensätze gemäß seinen Vorgaben und Anforderungen auswertet. Dabei bezeichnet der Grad der Verschleierung hierbei die Gruppengröße, also die Schwarmgröße, welche für die Verschleierung erreicht worden ist. Exemplarisch wurde beispielsweise der Datensatz so verändert, dass er von einem Schwarm von zehn möglichen Fahrzeugen generiert sein könnte, d.h. die den Grad der Verschleierung definierende Gruppengröße beträgt in diesem Beispiel zehn. Weiter wird mit dem anonymisierten Datensatz ausgegeben mit welcher Verteilungsfunktion einschließlich des Zeitoffsets die Daten verschleiert worden sind und welches Positionsrauschen zum Einsatz kam.

Wie bereits erwähnt, ist der die Abschnitte A1 bis A6 umfassende Anonymisierungsfilter A von der Berechnung der Verkehrsdichte im Abschnitt A3 abhängig, die eine Schätzung beinhaltet wie viele Fahrzeuge sich in der Region befinden, in der die Daten gesammelt werden und die mit dem in Frage kommenden Backend kommunizieren.

Um den Anonymisierungsfilter A und dessen Schätzung der Verkehrsdichte zu validieren und kontinuierlich zu verbessern, wird ein Beobachter B dem Anonymisierungsfilter A zugeordnet, wobei der Beobachter B eine punktuelle Prüfung der Funktionalität des Anonymisierungsfilters A durchführt. Hierbei wird wie folgt vorgegangen:

Der Beobachter B entnimmt im Abschnitt B1 einen zufälligen initialen anonymen Datensatz mit der Angabe des Grades der Verschleierung. Diese Entnahme kann entweder bei jedem Datensatz erfolgen oder aus Gründen der Rechenperformanz nur bei jedem zehnten, einhundertsten oder eintausendsten anonymisierten Datensatz.

Anschließend werden die dem entnommenen initialen Datensatz nachfolgenden Datensätze, welche durch den Anonymisierungsfilter A laufen, insofern im Abschnitt B2 geprüft, ob diese mit dem initialen Datensatz in eine Anonymisierungsgruppe fallen. Mit anderen Worten, es werden die innerhalb des Positionsrauschens des initialen Datensatzes fallenden weiteren Datensätze aufgesammelt und im Abschnitt B2 mit dem initialen Datensatz zusammengeführt, wobei dies innerhalb eines vorgegebenen Zeitintervalls von Null bis zu dem oben genannten vorgegebenen maximalen Zeitoffset der zeitlichen Verschleierung geschieht.

Nach Ablauf des Zeitintervalls werden im Abschnitt B3 die gefundenen Daten gezählt und somit die erreichte Anonymisierungsgruppe für die verrauschte Position des initialen Datensatzes real bestimmt. Diese gemessene Ist-Größe, also die Anzahl der im Zeitintervall innerhalb des Positionsintervalls gefundenen Datensätze, wird mit der Sollgröße, also der im initialen Datensatz angegebenen Gruppengröße, verglichen. Die Differenz zwischen der in Abschnitt A3 des Anonymisierungsfilters A geschätzten Sollgröße und der realen Ist-Größe wird mit einem Orts- und einem Zeitbezug der Daten einem Regler A7 des Anonymisierungsfilters A zugeführt.

Der Regler A7 führt das Ergebnis, nämlich die Differenz zwischen Soll- und Ist-Wert, einer Korrekturkarte in Abschnitt A8 zu, wobei durch den Regler A7 und die Korrekturkarte des Abschnitts A8 nur bedingt angepasst wird. Dabei besteht die Korrekturkarte selbst aus Kartenkachelelementen, die bedingt durch den Beobachter B einen jeweiligen Korrekturwert aufweisen, welche die Verschleierung in dieser Kachel direkt anpasst. Dadurch wird das Modell zur Verschleierung der sendenden Fahrzeuge möglichst gut an die Realität angepasst wird. Ein Kachelelement einer Karte umfasst dabei ein vorgegebenes Umfeld einer Menge von Positionen. Mit anderen Worten, eine Karte beispielsweise eines Bundeslandes umfasst eine vorgegebene Menge von Kachelelementen, die die Karte des Bundeslandes überdecken.

Ziel der Anpassung der Korrekturkarte ist es hierbei, die Korrekturkarte selbst nur langsam zu verändern. Positive wie negative Ausreißer sind daher durch den Regler A7 zu erkennen und entsprechend abzufangen, sodass die Korrekturkarte im Mittel immer richtig ist. Bedingt durch lokale Häufungen von Fahrzeugen oder Fahrzeugklassen an Positionen zu bestimmten Zeiten kann es immer im Fahrzeugschwarm zu kurzzeitigen Ausreißern kommen, welche jedoch nicht die Korrekturkarte des Abschnitts A8 beeinträchtigen dürfen. Neben dem Ort, d.h. der Position, wird in einer weiteren Dimension das Modell hinsichtlich des Zeitpunkts der Daten korrigiert. Hierbei werden zeitliche Abweichungen von Modell erkannt und können entsprechend ortsbezogen korrigiert werden. Mit anderen Worten, die Anpassung der Korrekturkarte darf nicht sprunghaft erfolgen, da dies zu Schwingungen des Reglers führen könnte. Ergibt daher die Messung des Beobachters B, dass eine reale Schwarmgröße von zehn Fahrzeugen vorliegt, obwohl zur Verschleierung aufgrund der Schätzung der Verkehrsdichte eine Schwarmgröße von 20 Fahrzeugen angenommen wurde, so wird die zeitliche und räumliche Verschleierung nicht schlagartig dahingehend verändert, dass die zur Verschleierung verwendete Schwarmgröße auf die 20 Fahrzeuge erhöht wird, sondern in der Korrekturkarte kann beispielsweise der Mittelwert von 15 Fahrzeugen verwendet werden, der dann langsam weiter als Funktion des Beobachters B erhöht werden kann.

Während das Konzept des Beobachters B darauf abzielt, stichprobenartig das Verschleierungsverfahren und dessen Parameter zu überprüfen, kann noch ein zusätzlicher Mechanismus auf dem Backend implementiert werden, der kontinuierlich den Grad der Verschleierung, also die Effektivität der gewählten Methode, misst und quantifiziert. Hierbei geht es auch um die Überprüfung, ob ein Angreifer aus dem vorhandenen Datensatz unter Zuhilfenahme von Methoden des Herausgreifens, sog. singling out, der Verknüpfung, beispielsweise durch eine Korrelationsanalyse, oder Inferenz, also das Ableiten des Wertes eines Merkmals mit einer signifikanten Wahrscheinlichkeit von den Werten einer Reihe anderer Merkmale, in der Lage ist, eine Person beziehungsweise ein Fahrzeug aus einem Datenbestand wieder zu identifzieren oder einen Personenbezug in dem anonymisierten Datensatz wieder herzustellen.

Da es sich vorliegend um geospatiale sowie um Daten mit relevantem Zeitstempel handelt, bietet sich hierfür beispielsweise das Verfahren "Mean Time To Confusion (MTTC)" an. Dabei wird kontinuierlich gemessen, wie lange es einem Angreifer gelingt, einem anonymen Nutzer in einer definierten Konfidenzumgebung zu folgen. Je besser die zur Anonymisierung des Datensatzes gewählte Methode, desto kürzer fällt der MTTC aus. Der Algorithmus ist demnach ein Maß für die Wirksamkeit des gewählten Anonymisierungsverfahrens.

So kann beispielsewise eine Fahrt in einem Datensatz randomisierter Fahrten verschiedener Fahrzeuge der ursprünglichen Fahrt mit einer bestimmten Wahrscheinlichkeit basierend auf Zeit, Ort, Fahrtrichtung und Geschwindigkeit zugeordnet werden. Bei wiederholter Durchführung und bei einem großen Datensatz lässt sich berechnen, wie lange eine Trajektorie im anoymisierten Datensatz mit einer definierten Wahrscheinlichkeit verfolgt werden kann. Aus dieser Verteilung der "Time to confusion" in Relation zur Länge der Trajektorien läßt sich der gemittelte MTTC ermitteln.

Mit dem vorgeschlagenen Konzept des Beobachters kann die Anonymsierungskomponente im Backend sowohl stichprobenartig mittels des Beobachters B als auch beispielsweise mit dem Verfahren des MTTC kontinuierlich auf ihre Wirksamkeit überprüft werden. Dies erhöht die nach Datenschutzrecht konforme Nutzung anonymisierter personenbezogener Daten erheblich.

### Bezugszeichenliste

- A: Anonymisierungsfilter
- B: Beobachter
- IN: Eingang Datensatz original
- OUT: Ausgang anonymisierter Daten
- A1: Entfernen personengezogener Daten aus dem Originaldatensatz
- A2: Zuschneiden Datensatz
- A3: Berechnung der Verkehrsdichte
- A4: Zeitliche Verschleierung
- A5: Räumliche Verschleierung
- A6: Datensatz ohne Personenbezug einschließlich Angabe des Verschleierungsgrades
- A7: Regler zur Korrektur der Verschleierung
- A8: Korrekturkarte bezüglich der Intensität der Verschleierung
- B1: Zufällige Auswahl eines Datensatzes
- B2: Sammlung weiterer Datensätze mit gleicher Position
- B3: Ermittlung eines Korrekturparameters anhand der gesammelten Datensätze

## Patentansprüche

1. Verfahren zur Überwachung und Korrektur der Verschleierung der an einen Backend-Rechner übertragenen fahrzeugbezogenen Daten eines Fahrzeugs durch einen Anonymisierungsfilter (A), aufweisend:
Entfernen personenbezogener Daten aus den übertragenen fahrzeugbezogenen Daten,
Zusammenfassen der fahrzeugbezogenen Daten nach der Entfernung des Personenbezugs zu einem fahrzeugbezogenen Datensatz ohne Personenbezug, Durchführen einer zeitlichen und räumlichen Verschleierung des fahrzeugbezogenen Datensatzes ohne Personenbezug basierend auf einer geschätzten Schwarmgröße von datensammelnden Fahrzeugen zur Erzeugung eines anonymen Datensatzes, und Bereitstellen des anonymen Datensatzes einschließlich des Grades der Verschleierung an einen Datennutzer, wobei
anhand der bereitgestellten anonymen Datensätze eine tatsächliche Schwarmgröße für eine räumliche Region ermittelt wird,
die ermittelte tatsächliche Schwarmgröße mit der zur Verschleierung der anonymen Datensätze verwendeten geschätzten Schwarmgröße verglichen wird, und
das Vergleichsergebnis zur Korrektur der Verschleierung der räumlichen Region verwendet wird.

2. Verfahren nach Anspruch 1, wobei
die Korrektur der Verschleierung sowohl in zeitlicher als auch in räumlicher Hinsicht erfolgt.

3. Verfahren nach Anspruch 1 oder 2, zur Ermittlung der tatsächlichen Schwarmgröße aufweisend:
Zufälliges Auswählen eines initialen anonymen Datensatzes,
Sammlung weiterer, dem initialen Datensatz nachfolgender anonymer Datensätze für ein vorgegebenes Zeitintervall, wobei die nachfolgenden Datensätze die Region des initialen Datensatz betreffen,
Bestimmen der tatsächlichen Schwarmgröße durch Bestimmen der Anzahl der anonymen Datensätze innerhalb des vorgegebenen Zeitintervalls für die durch verschleierte Position des initialen Datensatzes vorgegebene räumliche Region, Vergleich der tatsächlichen Schwarmgröße mit der durch den Grad der Verschleierung des initialen Datensatzes festgelegten geschätzten Schwarmgröße, und
Korrektur der Verschleierung des Anonymisierungsfilters (A) für die vorgegebene räumliche Region anhand des Vergleichsergebnisses.

4. Verfahren nach einem der vorangegangenen Ansprüche, wobei
Korrekturgrößen für unterschiedliche räumliche Regionen in einer Korrekturkarte für die unterschiedlichen räumlichen Regionen abgelegt werden und eine Korrektur der geschätzten Schwarmgröße anhand der Korrekturkarte für die jeweilige Region erfolgt.

5. Verfahren nach einem der vorangegangenen wobei
die Korrektur der Verschleierung der räumlichen Region stetig differenzierbar erfolgt.

6. Verfahren nach einem der vorangegangenen Ansprüche, wobei
der Grad der Verschleierung der anonymisierten Datensätze weiter dahingehend überprüft wird, ob ein Angreifer aus einem anonymen Datensatz das datensammelnde Fahrzeug wieder identifizieren kann.

7. Verfahren nach Anspruch 6, wobei
ein Mean-Time-to-Confusion-Verfahren verwendet wird.

8. Vorrichtung zur Überwachung und Korrektur der Verschleierung der an einen Backend-Rechner übertragenen fahrzeugbezogenen Daten eines Fahrzeugs, wobei die Vorrichtung zur Durchführung des Verfahrens nach einem der vorangegangenen Ansprüche eingerichtet und ausgelegt ist, mit
einem Anonymisierungsfilter (A) zum Anonymisieren der fahrzeugbezogenen Daten umfassend
einer Einrichtung zum Entfernen personenbezogener Daten (A1),
einer Einrichtung zum Berechnen der Verkehrsdichte (A3),
einer Einrichtung zur zeitlichen Verschleierung der Daten (A4),
einer Einrichtung zur räumlichen Verschleierung der Daten (A5), und
einer Einrichtung zur Ausgabe der anonymen Daten mit Angabe des Verschleierungsgrades, und mit
einem Beobachter (B) mit
einer Einrichtung zur zufälligen Auswahl eines anonymen Datensatzes (B1),
einer Einrichtung zur Sammlung weiterer anonymer Datensätze gleicher Position (B2) und Ermittlung der tatsächlichen Schwarmgröße, und
einer Einrichtung zum Vergleich der tatsächlichen Schwarmgröße mit der geschätzten Schwarmgröße zur Bestimmung eines Korrekturparameters für den Anonymisierungsfilter (A).

9. Vorrichtung nach Anspruch 8, wobei der Anonymisierungsfilter (A) einen Regler (A7) und eine Korrekturkarte (A8) umfasst.

10. Vorrichtung nach Anspruch 8 oder 9, wobei
der Anonymisierungsfilter (A) eine Einrichtung zum Erstellen und Begrenzen eines eingehenden Datensatzes (A2) aufweist.

## Claims

1. Method for monitoring and correcting the obfuscation of the vehicle-related data of a vehicle that are transmitted to a backend computer, by way of an anonymization filter (A), comprising:
removing person-related data from the transmitted vehicle-related data,
combining the vehicle-related data, following removal of the personal reference, to produce a vehicle-related dataset without personal reference,
performing temporal and spatial obfuscation of the vehicle-related dataset without personal reference based on an estimated swarm size of data-collecting vehicles in order to generate an anonymous dataset, and providing the anonymous dataset, including the level of the obfuscation, to a data user, wherein
the anonymous datasets provided are used to determine an actual swarm size for a spatial region,
the actual swarm size determined is compared with the estimated swarm size used to obfuscate the anonymous datasets, and
the comparison result is used to correct the obfuscation of the spatial region.

2. Method according to Claim 1, wherein
the obfuscation is corrected in both temporal and spatial terms.

3. Method according to Claim 1 or 2, for determining the actual swarm size, comprising:
randomly selecting an initial anonymous dataset,
collecting further anonymous datasets, subsequent to the initial dataset, for a predefined time interval, the subsequent datasets relating to the region of the initial dataset,
ascertaining the actual swarm size by ascertaining the number of anonymous datasets within the predefined time interval for the spatial region predefined by the obfuscated position of the initial dataset,
comparing the actual swarm size with the estimated swarm size stipulated by the level of the obfuscation of the initial dataset, and
correcting the obfuscation of the anonymization filter (A) for the predefined spatial region on the basis of the comparison result.

4. Method according to one of the preceding claims, wherein
correction variables for different spatial regions are stored in a correction map for the different spatial regions and the estimated swarm size is corrected on the basis of the correction map for the respective region.

5. Method according to one of the preceding claims, wherein
the obfuscation of the spatial region is corrected in constantly differentiable fashion.

6. Method according to one of the preceding claims, wherein
the level of the obfuscation of the anonymized datasets is further checked for whether an attacker is able to re-identify the data-collecting vehicle from an anonymous dataset.

7. Method according to Claim 6, wherein
a mean-time-to-confusion method is used.

8. Apparatus for monitoring and correcting the obfuscation of the vehicle-related data of a vehicle that are transmitted to a backend computer, the apparatus being configured and designed to perform the method according to one of the preceding claims, having an anonymization filter (A) for anonymizing the vehicle-related data, comprising
a device for removing person-related data (A1),
a device for calculating the traffic density (A3),
a device for temporally obfuscating the data (A4),
a device for spatially obfuscating the data (A5), and
a device for outputting the anonymous data with an indication of the level of obfuscation, and having an observer (B) having
a device for randomly selecting an anonymous dataset (B1),
a device for collecting further anonymous datasets in the same position (B2) and determining the actual swarm size, and
a device for comparing the actual swarm size with the estimated swarm size in order to ascertain a correction parameter for the anonymization filter (A).

9. Apparatus according to Claim 8, wherein
the anonymization filter (A) comprises a controller (A7) and a correction map (A8).

10. Apparatus according to Claim 8 or 9, wherein
the anonymization filter (A) has a device for creating and limiting an incoming dataset (A2).

## Revendications

1. Procédé permettant de surveiller et de corriger la dissimulation des données de véhicule d'un véhicule, transmises à un ordinateur d'arrière-plan, par un filtre d'anonymisation (A), présentant les étapes consistant à :
supprimer des données personnelles des données de véhicule transmises,
regrouper les données de véhicule selon l'éloignement de la relation personnelle en un ensemble de données de véhicule sans relation personnelle,
effectuer une dissimulation temporelle et spatiale de l'ensemble de données de véhicule sans relation personnelle sur la base d'une taille d'essaim estimée de véhicules collecteurs de données afin de générer un ensemble de données anonymes, et
fournir l'ensemble de données anonymes avec le degré de la dissimulation à un utilisateur de données, dans lequel
une taille d'essaim réelle est établie pour une région spatiale à l'aide des ensembles de données anonymes fournis,
la taille d'essaim réelle établie est comparée avec la taille d'essaim estimée utilisée pour la dissimulation des ensembles de données anonymes, et
le résultat de comparaison est utilisé pour corriger la dissimulation de la région spatiale.

2. Procédé selon la revendication 1, dans lequel la correction de la dissimulation est effectuée à la fois sur le plan temporel et spatial.

3. Procédé selon la revendication 1 ou 2 permettant d'établir la taille d'essaim réelle, présentant les étapes consistant à :
sélectionner de manière aléatoire un ensemble de données anonymes initial,
collecter d'autres ensembles de données anonymes suivants l'ensemble de données initial sur un intervalle de temps prédéfini, les ensembles de données suivants concernant la région de l'ensemble de données initial,
déterminer la taille d'essaim réelle par la détermination du nombre des ensembles de données anonymes à l'intérieur de l'intervalle de temps prédéfini pour la région spatiale prédéfinie par la position dissimulée de l'ensemble de données initial,
comparer la taille d'essaim réelle avec la taille d'essaim estimée fixée par le degré de la dissimulation de l'ensemble de données initial, et
corriger la dissimulation du filtre d'anonymisation (A) pour la région spatiale prédéfinie à l'aide du résultat de comparaison.

4. Procédé selon l'une quelconque des revendications précédentes, dans lequel des grandeurs de correction pour différentes régions spatiales sont mémorisées sur une carte de correction pour les différentes régions spatiales, et une correction de la taille d'essaim estimée est effectuée à l'aide de la carte de correction pour la région respective.

5. Procédé selon l'une quelconque des revendications précédentes, dans lequel la correction de la dissimulation de la région spatiale est effectuée de manière différenciable en continu.

6. Procédé selon l'une quelconque des revendications précédentes, dans lequel le degré de la dissimulation des ensembles de données anonymisés est en outre vérifié pour savoir si un attaquant peut à son tour identifier le véhicule collecteur de données à partir d'un ensemble de données anonymes.

7. Procédé selon la revendication 6, dans lequel un procédé du délai moyen avant confusion est utilisé.

8. Dispositif permettant de surveiller et de corriger la dissimulation des données de véhicule d'un véhicule transmises à un ordinateur d'arrière-plan, dans lequel le dispositif permettant d'exécuter le procédé selon l'une quelconque des revendications précédentes est conçu et configuré avec
un filtre d'anonymisation (A) pour anonymiser les données de véhicule, comprenant
un moyen pour supprimer des données personnelles (A1),
un moyen pour calculer la densité de trafic (A3),
un moyen pour la dissimulation temporelle des données (A4),
un moyen pour la dissimulation spatiale des données (A5), et
un moyen pour sortir les données anonymes avec indication du degré de dissimulation, et comprenant
un observateur (B), comprenant
un moyen pour la sélection aléatoire d'un ensemble de données anonymes (B1),
un moyen pour collecter d'autres ensembles de données anonymes de même priorité (B2) et pour établir la taille d'essaim réelle, et
un moyen pour comparer la taille d'essaim réelle avec la taille d'essaim estimée pour déterminer un paramètre de correction pour le filtre d'anonymisation (A) .

9. Dispositif selon la revendication 8, dans lequel le filtre d'anonymisation (A) comprend un régulateur (A7) et une carte de correction (A8).

10. Dispositif selon la revendication 8 ou 9, dans lequel le filtre d'anonymisation (A) présente un moyen pour créer et limiter un ensemble de données entrant (A2) .
